Europäisches Patentamt

European Patent Office

Office européen des brevets

(11) Veröffentlichungsnummer: **0 330 158**
**A2**

## (12) EUROPÄISCHE PATENTANMELDUNG

(21) Anmeldenummer: 89103026.4

(22) Anmeldetag: 21.02.89

(51) Int. Cl.⁴: **B60G 11/10 , F16F 1/18**

(30) Priorität: 24.02.88 DE 3805683

(43) Veröffentlichungstag der Anmeldung:
30.08.89 Patentblatt 89/35

(84) Benannte Vertragsstaaten:
**AT BE DE ES FR GB IT NL SE**

(71) Anmelder: **BASF·Aktiengesellschaft**
**Carl-Bosch-Strasse 38**
**D-6700 Ludwigshafen(DE)**

(72) Erfinder: **Wolf-Ruediger, Paulus**
**Rosenstrasse 16**
**D-6800 Neu-Edingen Post Mannheim 71(DE)**
Erfinder: **Schuermann, Helmut**
**Burgunderstrasse 13**
**D-6701 Maxdorf(DE)**

(54) **Blattfeder.**

(57) Die aus einem langgestreckten Federkörper (1) bestehende und an beiden Enden Befestigungselemente aufweisende Blattfeder ist in ihrem Mittenabschnitt mit einer Befestigungseinrichtung ausgestattet, die durch eine den Federkörper einspannende Klemmplatte (3) und zweiteilige Federplatte (5) gebildet ist.

EP 0 330 158 A2

## BLATTFEDER

Die Erfindung bezieht sich auf eine Blattfeder, die im wesentlichen aus einem langgestreckten Federkörper mit Befestigungselementen an beiden Enden sowie mit einer zwischen den beiden Enden angeordneten, den Federkörper einspannenden Befestigungseinrichtung aus einer Klemmplatte einerseits und einer durch eine Verschraubung damit verbundene Federplatte andererseits des Federkörpers besteht.

Blattfedern stellen bei Fahrzeugen die federnde Verbindung zwischen dem Fahrzeugaufbau und den Fahrzeugachsen her. Die Federn, die normalerweise in Längsrichtung des Fahrzeugs eingebaut sind, nehmen neben den Vertikalkräften auch die Radführungskräfte auf. Dabei wird besonders die Einspannung in der Federmitte beansprucht, da dort alle Kräfte der Achse in die Feder eingeleitet werden. Die dadurch verursachte Verformung der Feder erzeugt eine Relativbewegung zwischen der Feder und den Einspannteilen, die wiederum zum Verschleiß des Federkörpers, insbesondere auf der unter Zugspannung stehenden Federseite führt.

Vorliegender Erfindung liegt dementsprechend die Aufgabe zugrunde, die bekannten Blattfedern dahingehend zu verbessern, daß die Relativbewegung zwischen dem eigentlichen Federkörper und den Einspannteilen weitgehend vermieden ist.

Die Lösung der Aufgabe besteht darin, daß bei einer Blattfeder der eingangs geschilderten Bauart die Federplatte quer zum Federkörper geteilt ist.

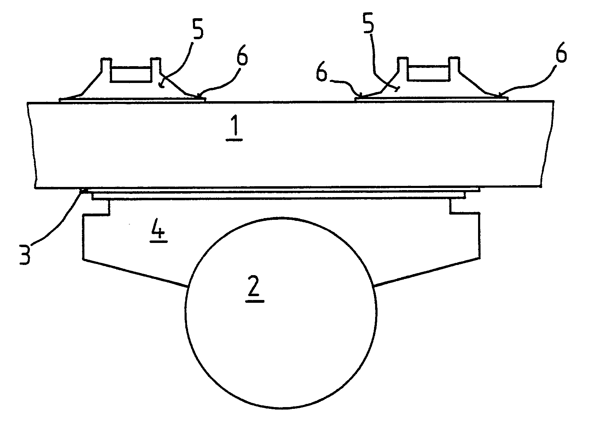

In der Zeichnung ist ein Ausführungsbeispiel der erfindungsgemäßen Blattfeder schematisch dargestellt und nachfolgend beschrieben.

Die Blattfeder ist in der Zeichnung ausschnittsweise im Längsschnitt dargestellt und besteht aus einem langgestreckten Federkörper 1, der entweder aus Federblättern zusammengesetzt ist oder durch einen faserverstärkten Kunststoffkörper gebildet ist. An den beiden Enden weist der Federkörper Elemente (in der Zeichnung nicht dargestellt) zur Befestigung am Fahrzeugaufbau auf, beispielsweise in Form von Ösen, die einen Bolzen aufnehmen können. Zwischen den beiden Enden, im Mittenabschnitt ist der Federkörper 1 zur Lagerung auf der Fahrzeugachse 2 in eine Einrichtung eingespannt, die aus einer Klemmplatte 3 mit einem Lagersattel 4 einer seits und einer quer zum Federkörper zweiteiligen Federplatte 5 andererseits besteht. Klemmplatte und Federplatten sind durch gebräuchliche Verschraubungen den Federkörper 1 einschließend zusammengespannt.

Es ist vorteilhaft, die geteilte Federplatte 5 im Bereich der quer zum Federkörper 1 verlaufenden Kanten 6 in der Plattenstärke auslaufen zu lassen. Damit wird eine Erhöhung der Schwingfestigkeit der Feder erreicht, da ein Sprung in der Steifigkeit zwischen Einspannung und Feder und damit der in die Feder eingeleiteten Kraft vermieden ist.

## Ansprüche

1. Blattfeder, bestehend aus einem langgestreckten Federkörper (1) mit Befestigungselementen an beiden Enden sowie mit einer zwischen den beiden Enden angeordneten, den Federkörper einspannenden Befestigungseinrichtung aus einer Klemmplatte (3) einerseits und einer durch eine Verschraubung damit verbundenen Federplatte (5) andererseits des Federkörpers, dadurch gekennzeichnet, daß die Federplatte (5) quer zum Federkörper (1) geteilt ist.

2. Blattfeder nach Anspruch 1, dadurch gekennzeichnet, daß die geteilte Federplatte (5) im Bereich der quer zum Federkörper (1) verlaufenden Kanten (6) einen die Plattenstärke vermindernden Auslauf ausweist.

464/87